# EUROPÄISCHE PATENTSCHRIFT

(11) **EP 3 035 004 B1**
(45) Veröffentlichungstag und Bekanntmachung des Hinweises auf die Patenterteilung: **06.12.2017**
(21) Anmeldenummer: 15002895.9
(22) Anmeldetag: 09.10.2015
(51) Int. Cl.: G01D 11/24, H02K 5/136, F16B 33/00, F16B 41/00

(54) **EXPLOSIONSGESCHÜTZTES GEHÄUSE FÜR EINEN SENSOR**
EXPLOSION-PROOF HOUSING FOR A SENSOR
BOITIER ANTI-DEFLAGRANT POUR UN CAPTEUR

(30) Priorität: 30.10.2014 DE 102014016052
(43) Veröffentlichungstag der Anmeldung: 22.06.2016
(73) Patentinhaber: Hengstler GmbH, 78554 Aldingen (DE)
(72) Erfinder: Wöhrstein, Andreas, 78126 Neuhausen (DE); Elbel, Peter, 78713 Schramberg (DE)
(74) Vertreter: Riebling, Peter

(56) Entgegenhaltungen:
- CN-U- 202 599 437
- DE-A1- 4 342 461
- DE-A1-102009 014 847
- DE-A1-102010 034 888
- DE-B3-102005 037 862
- FR-A1- 2 693 774
- JP-A- 2007 155 639
- US-A- 3 159 073

## Beschreibung

Die Erfindung betrifft ein explosionsgeschütztes Gehäuse für einen Sensor nach dem Oberbegriff des Patentanspruches 1.

Bei derartigen ex-geschützten Gehäusen ist zugelassen, dass im Innenraum des Gehäuses eine Explosion stattfinden kann und der dabei entstehende Explosionsdruck mit einem Druck von zum Beispiel 40 bar nicht nach außen in die Atmosphäre gelangen darf. Zu diesem Zweck sind solche Gehäuse druckgekapselt. Bei aus mehreren Teilen zusammen gesetzten Gehäusen, soll der im Innenraum entstehende Zündfunken nicht in die Umgebung gelangen. Zu diesem Zweck sind die Fügespalte zwischen den ineinander greifenden Gehäuseteilen mit eng toleriertem Passungsmaß ausgebildet. Sie müssen nach der DIN EN 60079-1 (VDE 0170-5) eine solche Länge und (geringe) Weite aufweisen, sodass ein im Innenraum des Gehäuses entstehender Explosionsdruck im Fügespalt (nachfolgend auch "Exspalt" genannt) verlischt und nicht in die Atmosphäre gelangen kann.

Somit wird gewährleistet, dass eine Durchzündung der im gekapselten Innenraum stattfindenden Explosion nicht in die - gegebenenfalls mit einem zündfähigen Gemisch angereicherte - Atmosphäre in der Umgebung des Sensors gelangt.

Die Fa. Pepperl + Fuchs hat unter der Serie 78-E zylindrische Drehgebergehäuse vorgestellt, die in explosiver Umgebung einsetzbar sind. Solche Drehgebergehäuse zeichnen sich dadurch aus, dass zwei Gehäusehälften mit am Umfang verteilt angeordneten Schrauben miteinander verbunden sind, wobei die Schrauben mit ihren Schraubenbolzen außerhalb des druckgekapselten Gehäuses liegen.

Ein solches Drehgeber-Gehäuse hat einen unerwünscht großen Außendurchmesser von etwa 100 mm. Der große Durchmesser entsteht dadurch, dass die Montageschrauben radial außerhalb des druckgekapselten inneren Gehäuses angeordnet sind. Damit müssen radial auswärts des druckgekapselten Bereiches noch zusätzliche Gehäuseflächen als Fügeflächen mit Exspalten geschaffen werden, die von den Montageschrauben durchsetzt sind, welche die Gehäuseflächen zusammenhalten. Bezogen auf ein Drehgeber-Gehäuse mit einer in vertikaler Richtung in das Drehgeber-Gehäuse einmündenden axialen Drehwelle sieht das bekannte Drehgeber-Gehäuse in radialer (horizontaler) Richtung sich auswärts erstreckende Fügespalte (Exspalte) vor, die in unerwünschter Weise den Außendurchmesser vergrößern.

Es sind im Übrigen andere explosionsgeschützte Gehäuse für Drehgeber und anderen Sensoren mit mehr als zwei in vertikaler Richtung übereinander, und über Fügespalte lösbar miteinander verbundene Gehäuseteilen bekannt, die radial auswärts des druckgeschützten Bereiches mit Montageschrauben abdichtend verbunden sind. Solche, sich radial auswärts erstreckenden Verbindungsbereiche zwischen den lösbar miteinander verbundenen Gehäuseteilen erhöhen in unerwünschter Weise den Gesamtdurchmesser des Sensorgehäuses.

Das deutsche Patent 10 2005 037 862 B3 zeigt ein explosionsgeschütztes Gehäuse für einen Sensor mit einem gegenüber der Atmosphäre druckdicht gekapselten Innenraum in dem mindestens ein Sensorteil angeordnet ist, sowie ein mindestens zweiteiliges Gesamtgehäuse mit einer lösbaren Haube und mehreren am Umfang verteilten Befestigungsschrauben zur Befestigung der Haube am Gehäuse. Nachteilig an dieser Vorrichtung ist jedoch die raumgreifende Bauweise des Gehäuses.

Der Erfindung liegt deshalb die Aufgabe zugrunde, ein explosionsgeschütztes Gehäuse für einen Drehgeber-Sensor zylindrischer Bauart der eingangs genannten Art so weiterzubilden, dass bezogen auf einen bestimmten, vorgegebenen Innendurchmesser des druckgekapselten Innenraums ein wesentlich geringerer Außendurchmesser des Gehäuses erreicht wird.

Zur Lösung der gestellten Aufgabe ist die Erfindung durch die technische Lehre des Anspruches 1 gekennzeichnet.

Als Ausführungsbeispiel der Erfindung wird genannt, dass bezogen auf eine im Innenraum des druckdichten Gehäuses angeordnete Leiterplatte mit einem Durchmesser von zum Beispiel 40 bis 50 mm, nur noch eine Gehäuseaußenabmessung von weiteren 5 bis 10 mm erforderlich ist.

Wesentliches Merkmal der Erfindung ist, dass der Drehgeber mindestens zweiteilig ausgebildet ist und mindestens aus einem Gehäuse und einer mit dem Gehäuse über axial gerichtete, als Exspalte ausgebildeten Fügespalte befestigten Haube besteht, die mittels axialer Befestigungsschrauben, welche jeweils einen zylindrischen Ex-Spalt ausbilden, mit dem Gehäuse verbunden ist.

Bei der gegebenen technischen Lehre ergibt sich der Vorteil, dass nun, anstatt den Verbindungsbereich (in unerwünschter Weise Durchmesser vergrößernd) radial außerhalb des ex-geschützten Bereiches (Druckbereich) anzuordnen, nunmehr die Haubenbefestigung zwischen der Haube und dem Gehäuse mit in den Druckbereich einbezogen wird. Die Fügespalte zwischen den ineinander greifenden Gehäuseteilen sind in ihrer Längserstreckung axial ausgerichtet und nicht mehr horizontal.

Die in diesem Bereich angeordneten, axialen Befestigungsschrauben bilden jeweils ein Ex-Spalt mit den zugeordneten Befestigungsflächen des Gehäuses und der Haube. Damit entfällt die Notwendigkeit, dass man außerhalb des druckgeschützten Bereiches noch einen zusätzlichen, Durchmesser vergrößernden Befestigungsbereich vorsieht. Dieser Befestigungsbereich ist nunmehr im Innenraum des Druckbereiches angeordnet und ist durch axial gerichtete, als Exspalte ausgebildete Fügespalte und axiale, gleichfalls Exspalte ausbildende Befestigungsbohrungen für die Befestigungsschrauben gebildet.

Dies ist ein völlig neuer Ansatz zur Ausbildung eines mindestens zweiteiligen explosionsgeschützten Gehäuses für einen Sensor allgemeiner Art, denn es entfällt die Notwendigkeit, radial auswärts des druckgekapselten oder druckgeschützten Bereiches einen zusätzlichen Befestigungsbereich mit Exspalten bzw. außerhalb der Exspalte vorzusehen.

In einer ersten Ausgestaltung der Erfindung ist es vorgesehen, dass das explosionsgeschützte Gehäuse aus zwei etwa zylindrischen Teilen besteht, nämlich einer Haube, die als Kabeleinführung dient und über welche mindestens ein Kabel in den Innenraum der Gehäuse eingeführt wird, und dem Gehäuse selbst.

Diese Haube kann erfindungsgemäß mit einem ein- oder mehrteiligen Gehäuse verbunden sein. In der folgenden Beschreibung und in den Patentansprüchen wird der Begriff "Gehäuse" entweder für ein einteiliges Gehäuse oder für ein mehrteiliges Gehäuse verwendet. Im Fall eines zwei- oder mehrteiligen Gehäuses besteht dieses mindestens aus dem eigentlichen Gehäuse und einer mit dem Gehäuse verbundenen zylindrischen Kappe.

Im Falle der Ausbildung eines einteiligen Gehäuses, besteht das Gehäuse aus einer Verbindung zwischen einer Kappe, die auf dem Gehäuse aufgesetzt ist, und dem Gehäuse selbst, wobei die Kappe und das Gehäuse bevorzugt ein - z.B. nach außen über eine Schraub- oder Klebeverbindung abgedichtetes - Teil bilden.

In einer anderen Ausgestaltung der Erfindung kann es vorgesehen sein, dass die Haube mit einem zweiteiligen Gehäuse verbunden ist. Die beiden Gehäuseteile, z. B. eine Kappe und das Gehäuse selbst, sind mit weiteren Schrauben miteinander verbunden. Es ist nicht notwendig, dass diese Schrauben zur Verbindung der beiden Gehäuseteile einen ex-geschützten Spalt (Exspalt) ausbilden, weil diese Schrauben im Druckbereich angeordnet sind und ein Druckstoß in diesem Bereich auf den abgedichteten Verbindungsbereich zwischen dem Gehäuse und der Kappe wirken. Eine solche Stoßverbindung ist bevorzugt dicht und druckstabil als zylindrische Gewindeschraubverbindung ausgebildet.

Für den Fall, dass die Kappe und das Gehäuse als getrennte und voneinander lösbare Teile ausgebildet sind, kann es demnach vorgesehen sein, dass neben und radial außerhalb der Schraubverbindung zusätzliche ex-geschützte Fügespalte vorgesehen sind, die entweder als zylindrischer Spalt ausgebildet sind, der eng toleriert ist und selbst abdichtet oder - in einer anderen Ausgestaltung - diese Spalte als Gewindeschraubverbindungen ausgebildet sind.

Der Gewindespalt dient dann dazu, dass der Zündfunke, der im Innenraum des Gehäuses entstehen kann, auch im Gewindespalt erlischt.

Im Mittelpunkt der Erfindung steht die Tatsache, dass erfindungsgemäß die durch die Befestigungsschrauben gebildeten, dann ex-geschützten Verbindungsbereiche in den Innenraum des Gesamtgehäuses des Sensors hinein verlegt werden. Hierzu wird jeweils eine spezielle Befestigungsschraube unter Ausbildung eines Ex-Spaltes innerhalb der Befestigungsbohrung verwendet. Hierunter wird eine zylindrische Schraube verstanden, die einen Schraubenkopf beliebiger Ausführung hat. Der Schraubenkopf kann einen Außensechskant, einen Innensechskant oder eine andere Betätigungsfläche aufweisen.

Unterhalb des Kopfes der Befestigungsschraube schließt sich ein zylindrischer Schaft mit eng toleriertem Durchmesser an, der eine nicht zu unterschreitende axiale Länge aufweist. Der Schaft bestimmter axialer Länge und Durchmessers ist in einer zugeordneten Durchgangsbohrung in der Haube eingepasst, wodurch sich zwischen dem Außendurchmesser des Zylinderschaftes der Befestigungsschraube und dem Innendurchmesser der Befestigungsbohrung ein eng tolerierter, ringförmiger Ex-Spalt bildet, der in seiner Länge und in seiner Durchmessertoleranz so ausgebildet ist, dass ein in diesen Ex-Spalt hineinschlagendes gezündetes Explosionsgemisch mit Sicherheit erlischt.

Bei einer M6-Schraube üblicher Abmessungen beträgt die Länge des zylindrischen Schaftes etwa 6 bis 8 mm und der Ex-Spalt, der sich am Innenumfang der Durchgangsbohrung der Haube bildet, hat maximal 1/10tel mm Weite.

An diesem zylindrischen Bolzen, der sich unmittelbar an den Kopf der Befestigungsschraube anschließt, schließt sich ein Gewindebolzen kleineren Durchmessers an, der in die zugeordnete Gewindebohrung am gegenüberliegenden Teil eingreift und dort eingeschraubt ist.

Der Exspalt, der die Verbindungsfläche zwischen der Haube und der Kappe bildet, ist so toleriert, dass er bei einer bestimmten, nicht zu unterschreitenden Länge eine bestimmte geringe Weite aufweist, um dafür zu sorgen, dass, wenn im Innenraum des Gehäuses eine Explosion geschieht, das explosive Gemisch nicht nach außen durch diesen Spalt hindurch zündet.

Für die Verbindung von Haube und Kappe gibt es drei verschiedene Ausführungsformen. In einer ersten Ausgestaltung ist die Befestigungsfläche, die durch den besagten Ex-Verbindungsspalt gekennzeichnet ist, in radialer Richtung gerade und nicht abgewinkelt (eben) ausgebildet. Sie erstreckt sich in ihrer Längserstreckung horizontal, also senkrecht zur Längsachse der (vertikal in das Gehäuse einmündenden) Welle.

In einer zweiten Ausgestaltung der Erfindung ist vorgesehen, dass die Verbindungsfläche aus einem horizontalen Ex-Verbindungsspalt besteht, der in einen zylindrischen, sich axial erstreckenden weiteren Ex-Verbindungsspalt übergeht. Bei dieser Anordnung ist der Verbindungsspalt demnach als Kombination aus einem radialen und einem axialen Verbindungsspalt gebildet, während im erstgenannten Fall der Verbindungsspalt lediglich in radialer Richtung ausgerichtet ist.

In einer dritten Ausgestaltung der Erfindung ist es vorgesehen, den Ex-Verbindungsspalt ausschließlich als zylindrischen, sich axial erstreckenden Spalt auszuführen. Gegebenenfalls gestaltungstechnisch sinnvolle, sich anschließende Fügespalte, haben dabei keine Ex-Schutz-Funktion.

### Abgedichteter Schraubenkopf:

Als weiterer Erfindungsgedanke der vorliegenden Erfindung, der in Kombination mit den Merkmalen des unabhängigen Anspruchs Schutz genießen soll, ist vorgesehen, dass am Schraubenkopf der Befestigungsschraube eine ringsumlaufende Dichtung (Dichtring) angeordnet ist, die sich abdichtend mit ihrem Außenumfang in einer zugeordneten Freistellung in der Haube oder einer anderen, nach außen gerichteten Gehäusefläche anlegt, um so eine durch den Schraubenkopf abgedichtete Freistellung in der Haube oder einer anderen nach außen gerichteten Gehäusefläche zu gewährleisten.

Der Dichtring ist demnach in einer Ringnut am Schraubenkopf angeordnet und legt sich mit seinem Außenumfang unter elastomerer Verformung abdichtend am Innenumfang der Freistellung in der Haube oder einer anderen nach außen offenen und nach außen gerichteten Gehäusefläche an. Wenn von oben in den dadurch gebildeten, abgedichteten Ringspalt Fremdstoffe, wie zum Beispiel Wasser, Flüssigkeiten, Stäube und dergleichen, eindringen, wird ein Vordringen dieser Stoffe am Dichtring vorbei in Richtung auf den Grund der Freistellung vermieden.

### Verliersicherung der Befestigungsschraube:

Als weiterer Erfindungsgedanke der vorliegenden Erfindung, der in Kombination mit den Merkmalen des unabhängigen Anspruchs Schutz genießen soll, ist eine Verliersicherung der Ex-Befestigungsschraube vorgesehen.

Bei diesem Ausführungsbeispiel ist vorgesehen, dass im Verbindungsbereich zu dem anderen Gehäuseteil eine nach oben geöffnete Freisparung angeordnet ist, in der ein Sicherungsring eingelegt ist, der sich an einem bestimmten Teil des Bolzens der Befestigungsschraube verschiebbar anlegt und an einem anderen Teil der Befestigungsschraube, der im Durchmesser vergrößert ist, lagengesichert anlegt, wenn die Befestigungsschraube herausgezogen wird. Auf diese Weise kann die Befestigungsschraube nur um einen bestimmten Auszugs- oder Löseweg aus der Befestigungsbohrung herausgezogen werden. Sie kann nicht vollständig herausgezogen werden. Sie ist demnach unverlierbar in der Befestigungsbohrung gehalten.

Eine solche unverlierbare Halterung ist bei den vorgenannten Ex-Befestigungsschrauben vorteilhaft, weil damit vermieden wird, dass eine Ex-Befestigungsschrauben nicht einfach gegen eine andere, nicht einen Ex-Spalt ausbildende Schrauben ausgetauscht werden kann. Außerdem ist durch die Unverlierbarkeit dafür gesorgt, dass solche Ex-Befestigungsschrauben auch bei der Montage eines mehrteiligen Gehäuses tatsächlich montiert und nicht versehentlich fortgelassen werden.

Der Erfindungsgegenstand der vorliegenden Erfindung ergibt sich aus den Patentansprüchen. Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: Schnitt durch ein explosionsgeschütztes Gehäuse für einen Sensor
Figur 2: die Explosionsdarstellung des Gehäuses nach Figur 1 mit Darstellung weiterer Einzelheiten
Figur 3: der Schnitt durch das Gehäuse nach Figur 1 in einer anderen Schnittlage in Höhe der kappenseitigen Befestigungsschrauben
Figur 4: Schnitt durch das Gehäuse nach Figuren 1 und 3 in Höhe der haubenseitigen Ex-Befestigungsschrauben
Figur 5: schematisiert gezeichneter Schnitt einer Ex-Befestigungsschraube im montierten Zustand in einer ersten Ausführungsform
Figur 6: eine gegenüber Figur 5 abgewandelte Ausführungsform
Figur 7: eine Darstellung schematisiert im Schnitt, wie ein Schraubenkopf gegenüber einer Ausnehmung in einer Haube abgedichtet werden kann
Figur 8: eine verschiebbare Verliersicherung an einer Ex-Befestigungsschraube in der Ruhestellung
Figur 9: die gleiche Darstellung wie Figur 8 der Verliersicherung in der Arbeitsstellung

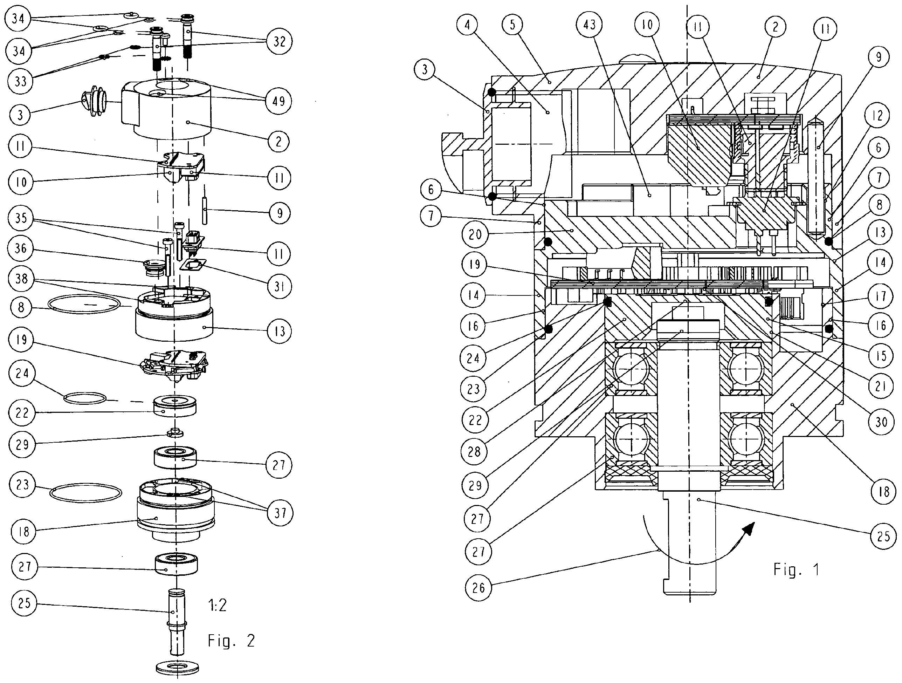

Nachdem in den Figuren 1 bis 4 die gleichen Teile eines explosionsgeschützten Gehäuses für einen als Drehgeber ausgebildeten Sensor dargestellt sind, werden für die gleichen Teile die gleichen Bezugszeichen verwendet.

Das in den Figuren 1 bis 4 dargestellte Gesamtgehäuse 1 weist einen druckgekapselten Innenraum 43 auf, der sich über sämtliche drei Gehäuseteile erstreckt, nämlich eine Haube 2, eine Kappe 13 und ein Gehäuse 18. Das Gesamtgehäuse 1 ist demnach dreiteilig und besteht aus der Haube 2, der mit der Haube 2 verbundenen Kappe 13 und dem mit der Kappe 13 verbundenen Gehäuse 18.

Wenn im Innenraum 43 eine Explosion stattfindet, soll durch die erfindungsgemäße ex-geschützte Verbindung der drei Gehäuseteile 2, 13, 18 mit den zugeordneten Befestigungsschrauben 32 dafür gesorgt werden, dass eine Durchzündung nach außen (in die Umgebung) nicht stattfindet.

Zu diesem Zweck besteht die Haube 2 gemäß Figuren 1 und 2 aus einem hülsenförmigen Teil, das eine seitliche Kabeleinführung 4 aufweist, die im gezeigten Ausführungsbeispiel provisorisch von einem Blindteil 3 abgeschlossen ist. Das Blindteil 3 ist lösbar in die Kabeleinführung 4 gesteckt und dient zum Transportschutz des Gesamtgehäuses 1. Im Einsatzfall wird in das Gewinde 5 der Kabeleinführung 4 ein zugeordneter - nicht zeichnerisch dargestellter - Dichtstopfen eingeschraubt, der das eingeführte Kabel gegenüber der Atmosphäre abgedichtet in den Innenraum 43 des Gesamtgehäuses 1 einführt.

Wichtig ist, dass die Haube 2 einen in axialer Richtung gerichteten umlaufenden Ringflansch 7 zur Ausbildung eines ersten Fügespalts aufweist, der an seinem Innenumfang einen zylindrischen Ex-Spalt 6 in Verbindung mit einem innen umlaufenden Ringflansch 12 der darunterliegenden Kappe 13 ausbildet.

Der Stirnseitenbereich des Ringflansches 7 der Haube 2 ist mit einem O-Ring 8 gegenüber dem zugeordneten umlaufenden Flansch der Kappe 13 abgedichtet.

Im Innenraum der Haube 2 ist ein Klemmblock 10 angeordnet, der über einen Steckverbinder 11 die elektrischen Steckverbindungen zu einem im Innenraum angeordneten Sensorteil 19 herstellt. Der Bodenbereich der Haube 2 ist durch ein Abdeckteil 20 gebildet, welches lediglich vom Steckverbinder 11 durchbrochen ist, der gemäß Figur 2 mit einer Flachdichtung 31 abgedichtet ist. Der Innenraum der Haube 2 ist deshalb hermetisch getrennt vom Innenraum der Kappe 13 und dem Gehäuse 18.

Zur besseren Montage der Haube 2 auf der Kappe 13 ist ein Zentrierstift 9 vorgesehen, der die lagenrichtige Zuordnung zwischen den beiden Teilen bei der Montage gewährleistet.

Im Innenraum der Kappe 13 ist der Sensorteil 19 angeordnet, der aus einer Leiterplatine mit darauf angeordneten elektrischen Bauteilen und Sensoren besteht, die einen Durchmesser von zum Beispiel 40 bis 50 mm aufweist.

Die Kappe 13 bildet einen unteren, axialen und nach unten gerichteten Ringflansch 14 zur Ausbildung eines zweiten Fügespaltes aus, der mit einem zugeordneten, entgegengesetzt gerichteten Ringflansch 17 eines Gehäuses 18 abdichtend in Verbindung steht und einen weiteren zylindrischen Ex-Spalt 16 (Fügespalt) bildet.

Die Stirnfläche am Ringflansch 14 ist gegenüber dem zugeordneten gegenüberliegenden Teil des Gehäuses 18 mit einem O-Ring 23 abgedichtet.

Am Gehäuse 18 greift die drehbare Welle 25 ein, die beispielsweise in Pfeilrichtung 26 drehbar ist und die an ihrer oberen Stirnseite einen Permanentmagneten 29 trägt, der mit der Welle 25 rotiert. Der Permanentmagnet 29 ist in einem Freiraum 28 an der Unterseite einer Zylinderbüchse 22 eingepasst, wobei die Zylinderbüchse 22 mit ihrem Außenumfang mit einem Ringflansch 21 einen zylindrischen Ex-Spalt 15 (Fügespalt) bildet.

Die Zylinderbüchse 22 ist mithilfe eines O-Rings 24 am Innenumfang des zylindrischen Gehäuses 18 abgedichtet.

Es wird noch darauf hingewiesen, dass die bezeichneten O-Ringe 8, 23, 24 auch entfallen können, weil die aneinander anliegenden Gehäuseflächen mit den dazwischen ausgebildeten Fügespalten für sich allein schon die geforderte Ex-relevante Abdichtung erbringen.

Die Welle 25 ist drehbar im Bereich von zwei, einen gegenseitigen Abstand einnehmender Kugellagern 27 gelagert, die am Innenumfang der Gehäusebohrung im Gehäuse 18 eingepasst sind.

Der Permanentmagnet 29 erzeugt bei Drehung der Welle ein rotatives Magnetfeld durch den dünn ausgeführten Bodenteil 30 der Zylinderbüchse 22 in Richtung auf das im Innenraum 43 des Gehäuses 18 angeordnete Sensorteil 19. Das rotierende Magnetfeld überträgt berührungslos die Positionsinformationen der Welle auf den im Innenraum des Gehäuses 18 angeordneten Sensorteil 19.

Gemäß den Figuren 2, 4 und 5 bis 6 werden zur Verbindung von Haube 2 und Kappe 13 spezielle Befestigungsschrauben 32 unter Ausbildung eines Ex-Spaltes 40 verwendet. Dies bedeutet, dass der Außenumfang eines Teils der Befestigungsschrauben 32 in Richtung auf den Innenumfang der Befestigungsbohrung die Ex-Spalte 40 ausbilden und es demnach nicht mehr erforderlich ist, radial nach außen gerichtete, den Durchmesser des gesamten Gehäuses vergrößernde Gehäuse- bzw. Haubenerweiterungen vorzusehen, wie es der Stand der Technik zeigt.

Die in axialer Richtung zur Welle 25 parallel verlaufenden Befestigungsschrauben 32 bilden mit den zugehörigen Flächen der Durchgangsbohrungen 39 in der Haube 2 die Ex-Spalte 40 aus. Diese verlaufen demnach innerhalb und nicht außerhalb des Exspalts 6 in axialer Richtung und nicht in radialer Richtung, wie es der Stand der Technik vorsieht. Dadurch kann der Durchmesser des Gesamtgehäuses 1 klein gehalten werden.

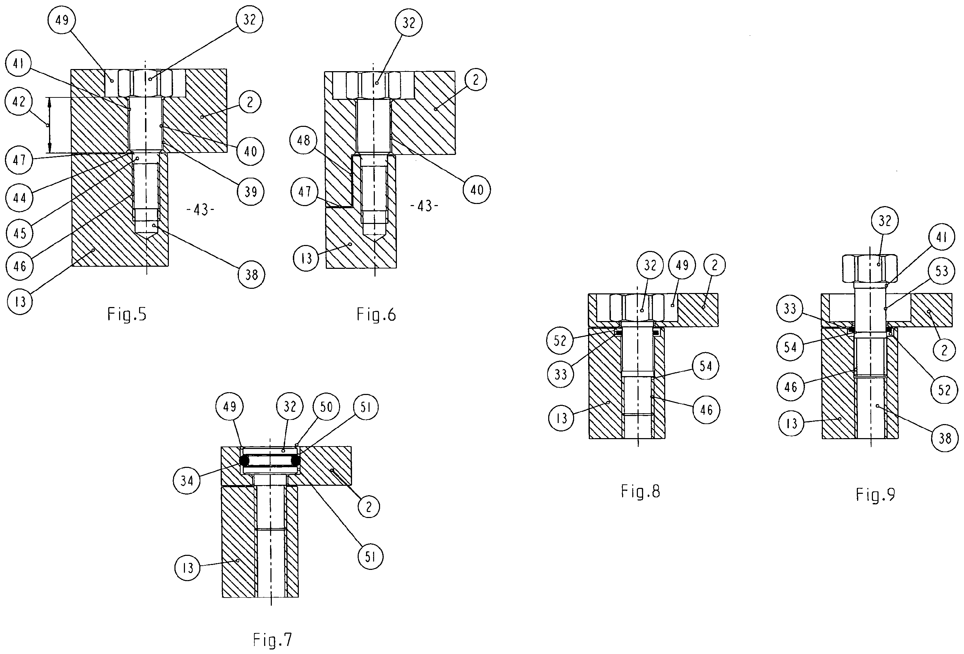

Dies ergibt sich aus der Explosionszeichnung nach Figur 2, wobei die Befestigungsschrauben 32 durch Freistellungen 49 im Bereich der Haube 2 hindurchgreifen und die Haube im Bereich von Durchgangsbohrungen 39 (siehe Figuren 5 und 6) durchsetzen. Die Durchgangsbohrungen 39 sind im Durchmesser und der Länge so dimensioniert, dass der Außendurchmesser des zylindrischen Schaftes 41 der jeweiligen Befestigungsschraube 32 zum Innendurchmesser der Durchgangsbohrung 39 eng toleriert ist, um so einen eng tolerierten Ex-Spalt 40 nach Vorschrift der DIN EN 60069-1, Ziffer 5.2.4.4 gemäß Figuren 5 und 6 zu bilden.

Die Weite des Ex-Spaltes 40 und dessen Länge sind gemäß Figur 5 so bemessen, dass bei Zündung eines zündfähigen Gemischs im Innenraum 43 des Gesamtgehäuses 1 dieses auf der Länge des Ex-Spaltes 40 erlischt und nicht in die Umgebung des Gehäuses gelangen kann. Die in die Durchgangsbohrungen 39 eingepassten zylindrischen Schäfte 41 der Befestigungsschrauben 32 bilden demnach die Exspalte 40 aus und trennen den druckdicht gekapselten Innenraum 43 des Gesamtgehäuses 1 von der den Sensor umgebenden Atmosphäre.

Bisher war es nicht bekannt, einen solchen Ex-Spalt 40 unmittelbar mit der Befestigungsschraube 32 selbst zu bilden. Auf diese Weise kommt der jeweiligen Befestigungsschraube 32 eine doppelte Funktion zu, nämlich einerseits die zuverlässige, lösbare Befestigung zwischen der Haube 2 und der Kappe 13, und andererseits der Ausbildung von Ex-Spalten 40, die nun nicht mehr radial auswärts in Verbindungsbereiche zwischen Haube 2 und Kappe 13 verlegt werden, sondern in die Haube 2 selbst in axialer Richtung integriert sind.

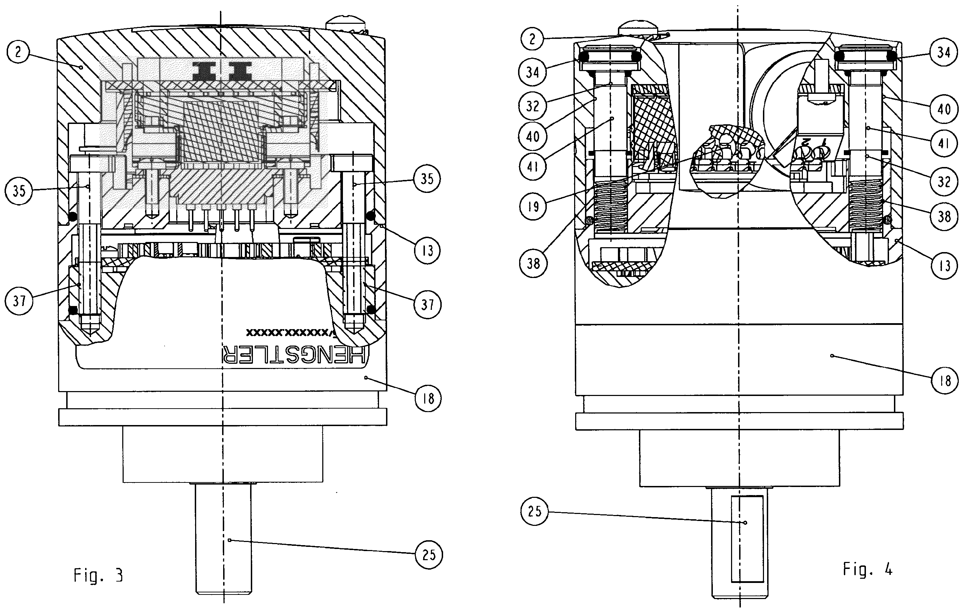

Die Einzelheiten ergeben sich aus den Figuren 3 und 4 in Verbindung mit den Figuren 5 und 6.

In Figuren 2 und 3 ist dargestellt, dass zur Verbindung zwischen der Kappe 13 und dem Gehäuse 18 Befestigungsschrauben 35 verwendet werden, die ausdrücklich nicht ex-geschützt ausgebildet sein müssen, weil die Ex-Spalte gemäß der Darstellung in Figur 1 durch die Ex-Spalte 6 und 16, sowie gegebenenfalls auch 15, gebildet sind.

Es kann sich also bei den Befestigungsschrauben 35 um einfache, handelsübliche Zylinderkopfschrauben handeln.

Im Bereich der Kappe 13 ist gemäß Figur 2 noch ein Stopfen 36 angeordnet, bei dessen Entfernung Einstellarbeiten auf der darunter liegenden Leiterplatte mit Sensorteil 19 vorgenommen werden können.

### Abgedichtete Befestigungsschrauben:

Bevorzugt tragen die Ex-Befestigungsschrauben 32 einen Schraubenkopf, der eine Ringnut ausbildet, in dem ein Dichtring 34 angeordnet ist. Gemäß Figur 7 legt sich der Dichtring 34 an den Innenumfang einer zugeordneten Freistellung 49 in der Haube abdichtend an, um gemäß Figur 7 zu vermeiden, dass, wenn in Pfeilrichtung 50 Fremdstoffe in Form von Stäuben, Gasen oder Flüssigkeiten in die Freistellung 49 gelangen, diese Stoffe nicht in den Ringspalt 51 unterhalb des Dichtringes 34 gelangen., Damit wird der Teil der Freistellung 49 unterhalb des Schraubenkopfes vor Korrosion und Verrottung geschützt.

Die Figur 7 zeigt die Schraubenabdichtung des Schraubenkopfes der Ex-Befestigungsschraube 32, wie auch in Figur 2 dargestellt.

Zur Figur 3 wird noch angefügt, dass die handelsüblichen Befestigungsschrauben 35 (Zylinderkopfschrauben) in Gewindebohrungen 37 im Gehäuse 18 eingeschraubt sind.

Die erfindungsgemäßen Ex-Befestigungsschrauben 32 sind hingegen in Gewindebohrungen 38 in der Kappe 13 eingeschraubt.

Diese besondere Schraubverbindung wird anhand der Figuren 5 und 6 näher erläutert.

An der Unterseite des Schraubenkopfes der Ex-Befestigungsschraube 32 setzt ein zylindrischer Teil mit einem Schaft 41 an, der in Bezug zum Innenumfang der Durchgangsbohrung 39 in der Haube 2 einen eng tolerierten Ex-Spalt 40 bildet, der eine bestimmte vorgeschriebene Weite nicht überschreiten darf.

Senkrecht an diesen Ex-Spalt 40 setzt sich dieser in einen weiteren Ex-Verbindungsspalt 47 fort, der die Verbindungsfläche zwischen der Haube 2 und der Oberseite der Kappe 13 bildet. Dieser Ex-Verbindungsspalt 47 weist ebenfalls eine eng tolerierte Weite und eine bestimmte Länge auf, um auch hier ein eindringendes, gezündetes Gemisch zum Erlöschen zu bringen.

Als Beispiel wird angegeben, dass die Länge des Ex-Spaltes 40 in axialer Richtung am Schaft 41 der Befestigungsschraube 32 eine bestimmte, nicht zu unterschreitende Spaltlänge 42 ausbilden muss.

Am zylindrischen Schaft 41 der Ex-Befestigungsschraube 32 schließt sich über einen Absatz 34 ein Gewindebolzen 46 verringerten Durchmessers an, der in an sich bekannter Weise über einen Gewindeauslauf 45 mit dem zylindrischen Schaft 41 größeren Durchmessers verbunden ist. Der Gewindebolzen 46 greift in die Gewindebohrung 38 in der Kappe 13 ein.

Die Figur 6 zeigt als abgewandeltes Ausführungsbeispiel einen äußeren, radialen Ex-Verbindungsspalt 47 an dem sich ein axialer Ex-Verbindungsspalt 48 anschließt. Die beiden Verbindungsspalte 47, 48 sind demnach zueinander abgewinkelt und bilden die explosionsgeschützten Exspalte aus.

In einer dritten Ausführungsform kann der in radialer Richtung sich erstreckende Ex-Verbindungsspalt 47 auch vollständig entfallen und lediglich ein axialer Verbindungsspalt 48 vorhanden sein.
Bei ausreichend großer Dimensionierung des axialen Verbindungsspalts 48 kann sich ein radialer Spalt 47 anschließend, der aber ohne Ex-funktion bleibt.

### Verliersicherung:

Die Figuren 8 und 9 zeigen eine verschiebbare Verliersicherung der Ex-Befestigungsschrauben 32. Hierbei ist wesentlich, dass unterhalb des lediglich verkürzt dargestellten zylindrischen Schaftes 41 noch ein weiterer Zylinderschaft 53 mit verringertem Durchmesser gegenüber dem Durchmesser des Schaftes 41 anschließt, sodass dadurch eine Verschiebungsfläche für einen im Bereich der Kappe in einer Freisparung 52 gehaltenen Sicherungsring 33 gebildet ist.

Der Sicherungsring gleitet beim Herausziehen der Befestigungsschraube 32 am Zylinderschaft 53 entlang und legt sich dann an einen Anschlag an der Unterseite der Bohrung in der Haube 2 an. Dieser Anschlag wird dadurch gebildet, dass der Gewindebolzen 46 axial nach oben durch einen Ringansatz 54 abgeschlossen ist, dessen Durchmesser größer ist als der Innendurchmesser des Sicherungsrings 33, der damit beim Herausziehen der Befestigungsschraube 32 nach oben gemäß Figur 5 mitgenommen wird. Damit ist die Befestigungsschraube 32 unverlierbar in 38 gehalten.

Dieses Ausführungsbeispiel bezieht sich zwar auf die Exspalte ausbildenden Befestigungsschrauben 32, ist aber darauf nicht beschränkt. In einer anderen Ausführung kann diese Art der Verliersicherung für jede andere Art von lösbar und verlierbar an einem Gehäuse gehaltenen Befestigungsschrauben angewendet werden.

Die abhängigen Patentansprüche tragen der Tatsache Rechnung, dass das Gesamtgehäuse 1 zwei- oder mehrteilig ausgebildet sein kann. Im Fall der dreiteiligen Ausbildung des Gesamtgehäuses 1 wird eine Haube 2 mit den erfindungsgemäßen Befestigungsschrauben 32 auf dem zweiteiligen, aus einer Kappe 13 und dem sich daran befestigten Gehäuse (18) bestehenden Körper abdichtend befestigt.

Im Fall einer zweiteiligen Ausbildung des Gesamtgehäuses 1 kann die Kappe 13 mit dem daran anschließenden Gehäuse 18 einen einteiligen Körper bilden. Ebenso ist es möglich, dass die Kappe 13 mit dem daran anschließenden Gehäuse 18 abdichtend über eine Gewindeschraubverbindung miteinander verbunden sind.

### Zeichnunasleaende

- 1: Gesamtgehäuse
- 2: Haube
- 3: Blindteil
- 4: Kabeleinführung
- 5: Gewinde
- 6: zylindrischer Ex-Spalt
- 7: Ringflansch (von 2)
- 8: O-Ring
- 9: Zentrierstift
- 10: Klemmblock
- 11: Steckverbinder
- 12: Ringflansch (von 13)
- 13: Kappe
- 14: Ringflansch (von 13)
- 15: zylindrischer Ex-Spalt (von 18)
- 16: zylindrischer Ex-Spalt
- 17: Ringflansch (von 18)
- 18: Gehäuse
- 19: Sensorteil
- 20: Abdeckteil (von 13)
- 21: Ringflansch (von 18)
- 22: Zylinderbüchse
- 23: O-Ring
- 24: O-Ring
- 25: Welle
- 26: Pfeilrichtung
- 27: Kugellager
- 28: Freiraum
- 29: Permanentmagnet
- 30: Bodenteil (von 22)
- 31: Flachdichtung
- 32: Befestigungsschraube mit Ex-Spalt
- 33: Sicherungsring
- 34: Dichtring
- 35: Befestigungsschraube
- 36: Stopfen
- 37: Gewindebohrung (für 35)
- 38: Gewindebohrung (für 32)
- 39: Durchgangsbohrung (von 2)
- 40: Ex-Spalt
- 41: Schaft (von 32) zylindrisch
- 42: Spaltlänge
- 43: Innenraum
- 44: Absatz
- 45: Gewindeauslauf
- 46: Gewindebolzen
- 47: Ex-Verbindungsspalt (eben)
- 48: Ex-Verbindungsspalt (zylindrisch)
- 49: Freistellung
- 50: Pfeilrichtung
- 51: Ringspalt
- 52: Freisparung
- 53: Zylinderschaft
- 54: Ringansatz

## Patentansprüche

1. Explosionsgeschütztes Gehäuse für einen Sensor, insbesondere für einen Drehgeber mit einer im Drehgeber drehbar angeordneten, axial ausgerichteten Welle (25) zur Erfassung eines Drehwinkels, mit einem gegenüber der Atmosphäre druckdicht gekapselten Innenraum (43) in dem mindestens ein Sensorteil (19) angeordnet ist, wobei ein mindestens zweiteiliges, etwa zylinderförmiges, kantiges oder kegelförmiges Gesamtgehäuse (1) aus einer Haube (2) besteht, die über mehrere, am Umfang verteilten Befestigungsschrauben (32) lösbar mit einem gegebenenfalls mehrteiligen Gehäuse (13, 18) verbunden ist, wobei mindestens ein Teil der sich berührenden Befestigungsflächen (6, 16) von Haube (2) und Gehäuse (13, 18) als explosionsgeschützte Exspalte (6, 16) ausgebildet sind, **dadurch gekennzeichnet, dass** zwischen der Haube (2) und dem gegebenenfalls mehrteiligen Gehäuse (13, 18) mindestens die Befestigungsschrauben (32) durch jeweils einen zylindrischen Schaft (41) in Richtung auf den Innenumfang einer zylindrischen Durchgangsbohrung (39) im Gehäuse (13, 18) einen Exspalt (40) zur Trennung des druckgekapselten Innenraum (43) und der Atmosphäre ausbilden.

2. Explosionsgeschütztes Gehäuse nach Anspruch 1, **dadurch gekennzeichnet, dass** die Längserstreckung der durch die Befestigungsschrauben (32) gebildeten Exspalte (40) parallel zur Längsachse der Welle (25) und des Gesamtgehäuses (1) verläuft.

3. Explosionsgeschütztes Gehäuse nach Anspruch 1 oder 2, **dadurch gekennzeichnet, dass** sich der in der Durchgangsbohrung (39) in Verbindung mit dem Außenumfang des zylindrischen Schaftes (41) der Befestigungsschraube (32) ergebende Exspalt (40) in radialer Richtung auswärts als Ex-Verbindungsspalt (47, 48) zwischen den aneinander anliegenden Gehäuseflächen von Haube (2) und Gehäuse (13, 18) fortsetzt.

4. Explosionsgeschütztes Gehäuse nach Anspruch 3, **dadurch gekennzeichnet, dass** der Ex-Verbindungsspalt (47, 48) radial auswärts gerade oder abgewinkelt radial auswärts gerade und zusätzlich axial abgewinkelt ausgebildet ist.

5. Explosionsgeschütztes Gehäuse nach einem der Ansprüche 1 bis 4, **dadurch gekennzeichnet, dass** auch die Fügespalte zwischen den lösbar miteinander verbundenen Gehäuseteilen (2, 13, 18) als zylindrische, in axialer Richtung sich erstreckende Exspalte (6, 16) ausgebildet sind.

6. Explosionsgeschütztes Gehäuse nach einem der Ansprüche 1 bis 5, **dadurch gekennzeichnet, dass** unterhalb des zylindrischen Schaftes (41) ein Zylinderschaft (53) mit verringertem Durchmesser anschließt, der als Verschiebungsfläche für einen im Bereich der Kappe (13) in einer Freisparung (52) gehaltenen Sicherungsring (33) gebildet ist und die Befestigungsschraube (32) unverlierbar in der Befestigungsbohrung an der Haube (2) hält.

7. Explosionsgeschütztes Gehäuse nach einem der Ansprüche 1 bis 6, **dadurch gekennzeichnet, dass** der Schraubenkopf der Befestigungsschraube (32) eine Ringnut aufweist, in der ein Dichtring (34) angeordnet ist, der sich an den Innenumfang einer zugeordneten Freistellung (49) in der Haube (2) abdichtend anlegt.

8. Explosionsgeschütztes Gehäuse nach einem der Ansprüche 1 bis 7, **dadurch gekennzeichnet, dass** an der Stirnseite der drehbar im Gehäuse (18) aufgenommenen Welle (25) ein Permanentmagnet (29) angeordnet ist, der bei Drehung der Welle (25) ein rotatives Magnetfeld durch den Bodenteil (30) einer in das Gehäuse (18) eingepassten Zylinderbüchse (22) in Richtung auf das im Innenraum (43) des Gehäuses (18) angeordnetes Sensorteil (19) erzeugt.

9. Explosionsgeschütztes Gehäuse nach einem der Ansprüche 1 bis 8, **dadurch gekennzeichnet, dass** an der Stirnseite oder am nahe der Stirnseite vorhandenen Umfang der drehbar im Gehäuse (18) aufgenommenen Welle (25) eine optische, kapazitive oder induktive Maßverkörperung angeordnet ist, die bei Drehung der Welle (25) durch ein im Innenraum (43) des Gehäuses (18) angeordnetes Sensorteil (19) ausgewertet wird.

10. Explosionsgeschütztes Gehäuse nach einem der Ansprüche 1 bis 9, **dadurch gekennzeichnet, dass** die Weite der Ex-Spalten (6, 16, 40) und deren Länge so bemessen ist, dass bei Zündung eines zündfähigen Gemischs im Innenraum (43) des Gesamtgehäuses (1) dieses auf der Länge der Ex-Spalten (6, 16, 40) erlischt und nicht in die Umgebung des Gesamtgehäuses (1) gelangen kann.

## Claims

1. Explosion-proof housing for a sensor, in particular for a rotary position transducer, having an axially oriented shaft (25) arranged rotatably in the rotary position transducer for detecting an angle of rotation, having an inner chamber (43) which is encapsulated pressure-tightly from the atmosphere and in which is arranged at least one sensor portion (19), wherein an approximately cylindrical, angular or conical overall housing (1) in at least two parts consists of a hood (2) which is releasably connected by a plurality of fixing screws (32) distributed over the periphery to a housing (13, 18) which is if necessary in a plurality of parts, wherein at least some of the fixing surfaces (6, 16) of hood (2) and housing (13, 18) which touch each other are designed as explosion-proof gaps (6, 16), **characterised in that**, between the hood (2) and the housing (13, 18) which if necessary is in a plurality of parts, at least the fixing screws (32) form an explosion-proof gap (40) for separating the pressure-tight encapsulated inner chamber (43) and the atmosphere in each case by a cylindrical shaft (41) in a direction towards the inner periphery of a cylindrical through-bore (39) in the housing (13, 18).

2. Explosion-proof housing according to claim 1, **characterised in that** the longitudinal extent of the explosion-proof gaps (40) formed by the fixing screws (32) runs parallel to the longitudinal axis of the shaft (25) and of the overall housing (1).

3. Explosion-proof housing according to claim 1 or 2, **characterised in that** the explosion-proof gap (40) formed in the through-bore (39) in conjunction with the outer periphery of the cylindrical shaft (41) of the fixing screw (32) continues in a radial direction outwards as an explosion-proof connecting gap (47, 48) between the adjoining housing surfaces of hood (2) and housing (13, 18).

4. Explosion-proof housing according to claim 3, **characterised in that** the explosion-proof connecting gap (47, 48) is straight or angled radially outwards or straight radially outwards and in addition axially angled.

5. Explosion-proof housing according to one of claims 1 to 4, **characterised in that** the joint gaps between the housing portions (2, 13, 18) releasably connected to each other are designed as cylindrical explosion-proof gaps (6, 16) running in the axial direction.

6. Explosion-proof housing according to one of claims 1 to 5, **characterised in that** below the cylindrical shaft (41) is an adjoining cylinder shaft (53) of reduced diameter which is formed as a sliding surface for a locking ring (33) held in a recess (52) in the region of the cap (13) and holds the fixing screw (32) in captive fashion in the fixing bore on the hood (2).

7. Explosion-proof housing according to one of claims 1 to 6, **characterised in that** the screw head of the fixing screw (32) has an annular groove in which is arranged a sealing ring (34) which is applied sealingly to the inner periphery of an associated clearance (49) in the hood (2).

8. Explosion-proof housing according to one of claims 1 to 7, **characterised in that** on the end face of the shaft (25) held rotatably in the housing (18) is arranged a permanent magnet (29) which, on rotation of the shaft (25), generates a rotational magnetic field through the bottom portion (30) of a cylinder bush (22) fitted in the housing (18), in a direction towards the sensor portion (19) which is arranged in the inner chamber (43) of the housing (18).

9. Explosion-proof housing according to one of claims 1 to 8, **characterised in that** on the end face or on the periphery present near the end face of the shaft (25) held rotatably in the housing (18) is arranged an optical, capacitive or inductive solid measure which, on rotation of the shaft (25), is evaluated by a sensor portion (19) arranged in the inner chamber (43) of the housing (18).

10. Explosion-proof housing according to one of claims 1 to 9, **characterised in that** the width of the explosion-proof gaps (6, 16, 40) and their length are such that, on ignition of an ignitable mixture in the inner chamber (43) of the overall housing (1), it is extinguished over the length of the explosion-proof gaps (6, 16, 40) and cannot pass into the environment of the overall housing (1).

## Revendications

1. Boîtier antidéflagrant pour un capteur, en particulier pour un capteur de rotation avec un axe (25) orienté axialement et disposé en rotation dans le capteur de rotation, pour détecter un angle de rotation, avec un espace intérieur (43) qui est encapsulé de manière étanche à la pression par rapport à l'atmosphère et dans lequel est disposé au moins un élément capteur (19), un boîtier d'ensemble (1) au moins en deux parties, à peu près cylindrique, anguleux ou conique, se composant d'un capot (2) qui est relié de manière amovible à un boîtier (13, 18) éventuellement en plusieurs parties, par l'intermédiaire de plusieurs vis de fixation (32) réparties sur la circonférence, une partie au moins des surfaces de fixation (6, 16) du capot (2) et du boîtier (13, 18) qui se touchent étant conçues comme des interstices d'explosion, antidéflagrants (6, 16), **caractérisé en ce qu'**entre le capot (2) et le boîtier (13, 18) éventuellement en plusieurs parties, au moins les vis de fixation (32), grâce à une tige cylindrique (41) respective, forment un interstice d'explosion (40) en direction de la circonférence intérieure d'un perçage traversant cylindrique (39) dans le boîtier (13, 18), pour séparer l'espace intérieur étanche à la pression (43) et l'atmosphère.

2. Boîtier antidéflagrant selon la revendication 1, **caractérisé en ce que** l'extension longitudinale des interstices d'explosion (40) formés par les vis de fixation (32) est parallèle à l'axe longitudinal de l'axe (25) et du boîtier d'ensemble (1).

3. Boîtier antidéflagrant selon la revendication 1 ou 2, **caractérisé en ce que** l'interstice d'explosion (40) obtenu, avec la circonférence extérieure de la tige cylindrique (41) de la vis de fixation (32), dans le perçage traversant (39) se prolonge dans le sens axial vers l'extérieur sous la forme d'un interstice de liaison d'explosion (47, 48) entre les surfaces de boîtier, appliquées l'une contre l'autre, du capot (2) et du boîtier (13, 18).

4. Boîtier antidéflagrant selon la revendication 3, **caractérisé en ce que** l'interstice de liaison d'explosion (47, 48) a une forme droite radialement vers l'extérieur, ou coudée en étant droite radialement vers l'extérieur et en supplément coudée axialement.

5. Boîtier antidéflagrant selon l'une des revendications 1 à 4, **caractérisé en ce que** les interstices de jointure entre les parties de boîtier (2, 13, 18) reliées de manière amovible sont conçus eux aussi comme des interstices d'explosion (6, 16) cylindriques qui s'étendent dans le sens axial.

6. Boîtier antidéflagrant selon l'une des revendications 1 à 5, **caractérisé en ce qu'**au-dessous de la tige cylindrique (41) se raccorde une tige cylindrique (53) de diamètre réduit qui est conçue comme une surface de déplacement pour une bague d'arrêt (33) retenue dans la zone du chapeau (13) dans un évidement (52), et qui retient la vis de fixation (32) de manière imperdable sur le capot (2) dans le perçage de fixation.

7. Boîtier antidéflagrant selon l'une des revendications 1 à 6, **caractérisé en ce que** la tête de la vis de fixation (32) présente une rainure annulaire dans laquelle est disposée une bague d'étanchéité (34) qui s'applique de manière étanche contre la circonférence d'un dégagement associé (49) dans le capot (2).

8. Boîtier antidéflagrant selon l'une des revendications 1 à 7, **caractérisé en ce qu'**il est prévu sur le côté frontal de l'axe (25) logé en rotation dans le boîtier (18) un aimant permanent (29) qui, quand l'axe (25) tourne, produit un champ magnétique rotatif à travers la partie de fond (30) d'une douille cylindrique (22) insérée dans le boîtier (18), en direction de l'élément capteur (19) disposé dans l'espace intérieur (43) du boîtier (18).

9. Boîtier antidéflagrant selon l'une des revendications 1 à 8, **caractérisé en ce qu'**il est prévu sur le côté frontal ou sur la circonférence, située près dudit côté frontal, de l'axe (25) logé en rotation dans le boîtier (18), une mesure matérialisée optique, capacitive ou inductive qui, quand l'axe (25) tourne, est analysée par un élément capteur (19) disposé dans l'espace intérieur (43) du boîtier (18).

10. Boîtier antidéflagrant selon l'une des revendications 1 à 9, **caractérisé en ce que** la largeur des interstices d'explosion (6, 16, 40) et leur longueur sont calculées pour qu'au cas où un mélange inflammable s'enflamme dans l'espace intérieur (43) du boîtier d'ensemble (1), ce mélange s'éteigne sur la longueur des interstices d'explosion (6, 16, 40) et ne puisse pas arriver dans l'environnement du boîtier d'ensemble (1).
